# EUROPÄISCHE PATENTSCHRIFT

(11) **EP 2 514 989 B1**
(45) Veröffentlichungstag und Bekanntmachung des Hinweises auf die Patenterteilung: **22.07.2015**
(21) Anmeldenummer: 12164734.1
(22) Anmeldetag: 19.04.2012
(51) Int. Cl.: F16D 55/226

(54) **Scheibenbremse, insbesondere für ein Nutzfahrzeug**
Disc brake, in particular for a commercial vehicle
Frein à disque, en particulier pour un véhicule utilitaire

(30) Priorität: 21.04.2011 DE 102011018408
(43) Veröffentlichungstag der Anmeldung: 24.10.2012
(73) Patentinhaber: KNORR-BREMSE Systeme für Nutzfahrzeuge GmbH, 80809 München (DE)
(72) Erfinder: Hidringer, Michael, 94544 Hofkirchen (DE); Brandl, Michael, 94447 Plattling (DE)
(74) Vertreter: Mattusch, Gundula

(56) Entgegenhaltungen:
- EP-A1- 2 363 616
- WO-A1-2007/028585
- DE-A1- 10 304 713
- DE-A1-102007 033 165
- DE-B3-102005 059 823
- DE-C1- 19 855 614

## Beschreibung

Die Erfindung betrifft eine Scheibenbremse, insbesondere für ein Nutfahrzeug, nach dem Oberbegriff des Anspruchs 1.

Zum Ausgleich eines Verschleißhubes, der durch einen Abtrag eines Reibbelages des Bremsbelages beim Bremsen entsteht, d.h., um ein auch als Arbeitshub zu bezeichnendes Lüftspiel zwischen der Bremsscheibe und dem Bremsbelag in Nichtfunktionsstellung des Bremsbelages konstant zu halten, ist eine gattungsgemäße Scheibenbremse zumindest zuspannseitig mit einer Nachstelleinrichtung versehen, die üblicherweise zwei über eine gemeinsame Antriebskette als Bestandteil einer Synchroneinrichtung drehbare und damit axial verschiebbare Stellspindeln aufweist.

Als weitere Bauteile gehören neben der Antriebskette auch mit den Stellspindeln verbundene Kettenräder zur Synchroneinrichtung, die außerhalb am Bremssattel positioniert und durch einen Verschlussdeckel zum Schutz vor Verschmutzungen und Beschädigungen abgedeckt sind.

Je nach Ausführung kann in dem bevorzugt aus Kunststoff bestehenden, vornehmlich im Spritzgussverfahren hergestellten Verschlussdeckel ein Potentiometer zur Verschleißerkennung angeordnet sein.

Die Befestigung des Verschlussdeckels erfolgt bislang nach der Montage der Synchroneinrichtung mittels Schrauben, die durch Durchgangsbohrungen im Verschlussdeckel geführt und in Gewindelöcher des Bremssattels eingedreht sind.

Allerdings sind diese Gewindelöcher nur mit einem erheblichen Fertigungsaufwand herstellbar, der einer stets angestrebten Kostenminimierung entgegensteht.

Die Schraubverbindung lässt sich naturgemäß leicht lösen, so dass ein unbefugter Zugriff auf die Synchroneinrichtung bzw. die Nachstelleinrichtung problemlos möglich ist. Damit erhöht sich jedoch die Gefahr einer Fehlfunktion, die gerade bei solchen sicherheitsrelevanten Systemen, wie sie eine Scheibenbremse darstellt, ausgeschlossen sein sollte

In der WO 2007/028585 A1 ist eine Scheibenbremse offenbart, bei der der Verschlussdeckel stoffschlüssig mit dem Bremssattel verbunden ist, was durch Verschweißen oder Verkleben erfolgt.

Eine form- und/oder stoffschlüssige Verbindung eines Deckels, der eine der Bremsscheibe zugewandte Montageöffnung verschließt, ist aus der DE 103 04 713 A1 bekannt, ebenso aus der DE 198 55 614 C1, die eine Verbindung des Deckels mit dem Bremssattel durch hohlzylindrische Elemente vorschlägt, die formschlüssig in Bohrungen des Bremssattels eingreifen.

Eine formschlüssige Verbindung des Deckels mit dem Bremssattel ist des Weiteren in der DE 10 2005 059 823 B3 gezeigt und beschrieben, wobei hierzu der Bremssattel angeformte Verbindungselemente aufweist, die Ausnehmungen des Deckels durchtreten und zum Formschluss verformt werden.

Die nachveröffentlichte EP 2 363 616 A1 gibt eine Scheibenbremse wieder, bei der der außenseitig am Bremssattel befestigte Deckel durch Kleben befestigt ist, was durch An- bzw. Aufschmelzen einer deckelseitigen Kunststofflage erfolgt.

Insbesondere aus gestalterischen Gründen, um den Innenraum des Bremssattels blickdicht zu verschließen, ist in der DE 10 2007 033 165 A1 eine Schutzblende vorgeschlagen, die mit einem, Federarme aufweisenden Halter verrastet ist, wobei dieser Halter mit seinen Federamen am Bremssattel gehalten ist.

Der Erfindung liegt die Aufgabe zugrunde, eine Scheibenbremse der gattungsgemäßen Art so weiterzuentwickeln, dass sie einfacher und kostengünstiger herstellbar ist und dass ihre Funktionssicherheit verbessert wird.

Diese Aufgabe wird durch eine Scheibenbremse mit den Merkmalen des Anspruchs 1 gelöst.

Durch den erfindungsgemäßen Gedanken, den Verschlussdeckel mit dem Bremssattel unlösbar zu verbinden, was so zu verstehen ist, dass Verbindungselemente zum Lösen des Verschlussdeckels zerstört werden müssen, wird eine ausreichende Sicherheit gegen ein unautorisiertes Entfernen des Verschlussdeckels verhindert und damit die Vermeidung eines Zugriffs auf die dadurch verborgenen Bauteile. Diese Maßnahme stellt eine wesentliche Verbesserung der Betriebssicherheit dar.

Der Verschlussdeckel ist mit dem Bremssattel verrastet, wozu am Verschlussdeckel und am Bremssattel miteinander korrespondierende Rastelemente vorgesehen sind.

Solche Rastelemente können beispielsweise aus Rastschenkeln bestehen, die in hinterschnittene Bohrungen des Gegenstücks eingreifen.

Bevorzugt sind die Rastschenkel im Sinne von Federelementen ausgebildet und quer zur Einschieberichtung verformbar, so dass sie beim Aufsetzen des Verschlussdeckels zurückgedrückt und nach dem Einführen aufgrund der innewohnenden Rückstellkräfte in ihre Ausgangsposition zurückbewegt werden, in der sie die erwähnte Hinterschneidung der Rastöffnung hintergreifen.

Wie geschildert, besteht der Verschlussdeckel üblicherweise aus Kunststoff und ist im Spritzgussverfahren hergestellt. Insofern bietet sich das Anspritzen der Rastschenkel bei der Herstellung des Verschlussdeckels an, so dass hierzu keine zusätzlichen Herstellungsarbeiten erforderlich sind.

Denkbar ist auch, die Rastelemente als separate Teile in Bohrungen des Verschlussdeckels oder des Bremssattels unlösbar einzusetzen.

Im Gegensatz zum Stand der Technik, bei dem in den Bremssattel Gewindebohrungen eingebracht werden müssen, kann auf solche Gewindebohrungen nun verzichtet werden, wodurch sich kürzere Fertigungszeiten ergeben mit der Folge geringerer Herstellungskosten, was vor allem deshalb bedeutsam ist, weil Scheibenbremsen in großen Stückzahlen hergestellt werden.

Zur Aufnahme der Rastschenkel sind lediglich hinterschnittene, durch einfaches mechanisches Bearbeiten herstellbare Rastöffnungen einzubringen.

Deren Anzahl kann der entsprechen, wie sie bislang durch die Gewindebohrungen bzw. die Verbindungselemente vorgesehen waren, beispielsweise insgesamt sechs an der Zahl, wobei die Rastelemente des Verschlussdeckels in dessen Randbereich angeordnet sind.

Eine besonders vorteilhafte Ausbildung der Rastelemente ist dann gegeben, wenn Rastelemente-Nester vorgesehen sind, bei denen jeweils mehrere Rastschenkel an den Verschlussdeckel angeformt oder Bestandteile von separaten, im Verschlussdeckel gehaltenen Rastelemente-Nestern sind. Im beschriebenen Sinn sind die Rastschenkel federnd ausgebildet, um eine einfache, jedoch wirksame Verrastung des Verschlussdeckels mit dem Bremssattel zu erzielen.

Dabei können beispielsweise drei, in gleichem Winkelabstand zueinander angeordnete Rastschenkel ein Rastelemente-Nest bilden, die gemeinsam in eine Rastöffnung des Bremssattels eingreifen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: den schematischen Aufbau einer erfindungsgemäßen Scheibenbremse in einer teilweise geschnittenen Draufsicht
- Figur 2: einen Teilausschnitt der Scheibenbremse, gesehen in Richtung des Pfeiles II in Figur 1

- Figur 3: einen Teilausschnitt des Verschlussdeckels in einer perspektivischen Ansicht.

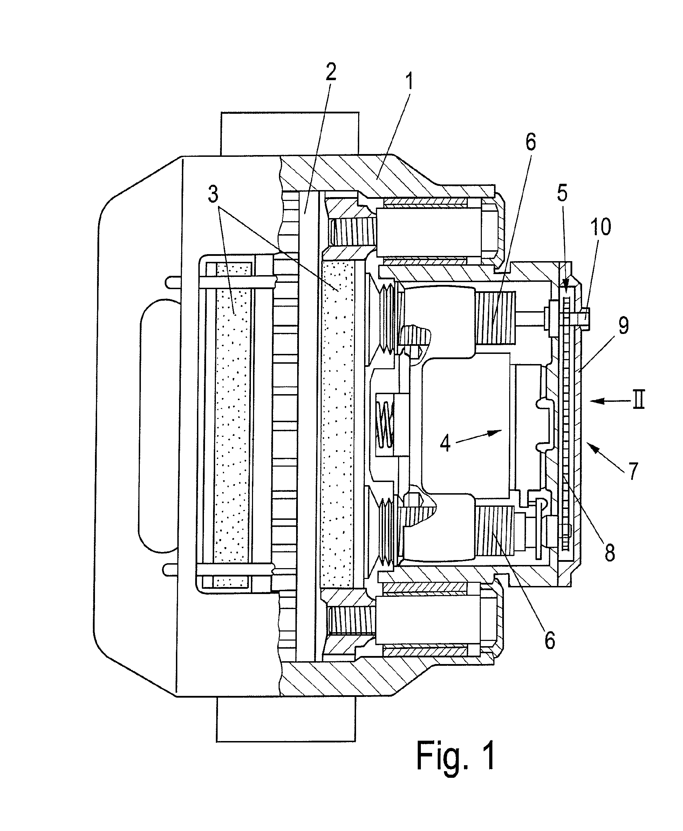

In der Figur 1 ist eine Scheibenbremse, insbesondere für ein Nutzfahrzeug, dargestellt, mit einem eine Bremsscheibe 2 übergreifenden Bremssattel 1, beidseitig der Bremsscheibe 2 angeordneten und diese bei einer Bremsung kontaktierenden Bremsbelägen 3, einer Zuspanneinrichtung 4, mit der der zuspannseitige Bremsbelag 3 gegen die Bremsscheibe 2 pressbar ist. Dabei wird der Anpressdruck von zwei Stellspindeln 6 von der Zuspanneinrichtung 4 auf den Bremsbelag 3 übertragen.

Weiter weist die Scheibenbremse eine Nachstelleinrichtung 5 auf, mit der eine verschleißbedingte Änderung eines Lüftspiels zwischen dem Bremsbelag 3 und der Bremsscheibe 2 im Wesentlichen ausgleichbar ist.

Für eine synchrone Verstellung der Stellspindeln 6 ist eine Synchroneinrichtung 5 vorgesehen, mit einem Kettentrieb, bestehend aus zwei, jeweils an den Stellspindeln 3 verdrehsicher angeordneten Kettenrädern sowie einer darauf geführten Kette 8.

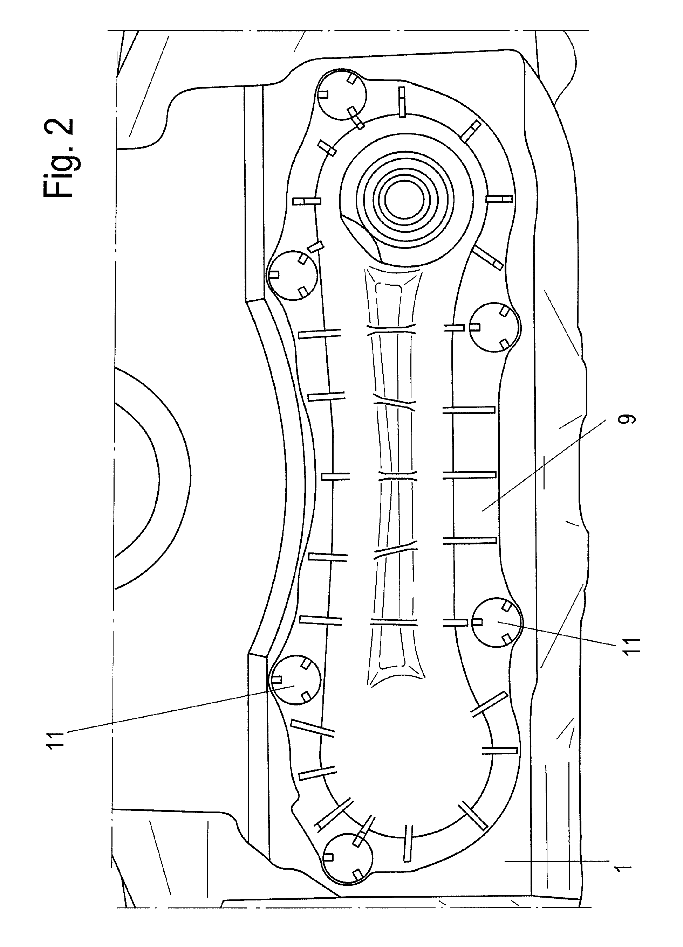

Die außerhalb des Bremssattels 1 positionierte Synchroneinrichtung 5, zu der auch eine Aufnahme 10 für eine Verschleißerkennung, beispielsweise für einen Potentiometer gehört, ist gegenüber der Umgebung durch einen Verschlussdeckel 9 abgedeckt, der in der Figur 2 als Einzelheit deutlich erkennbar ist.

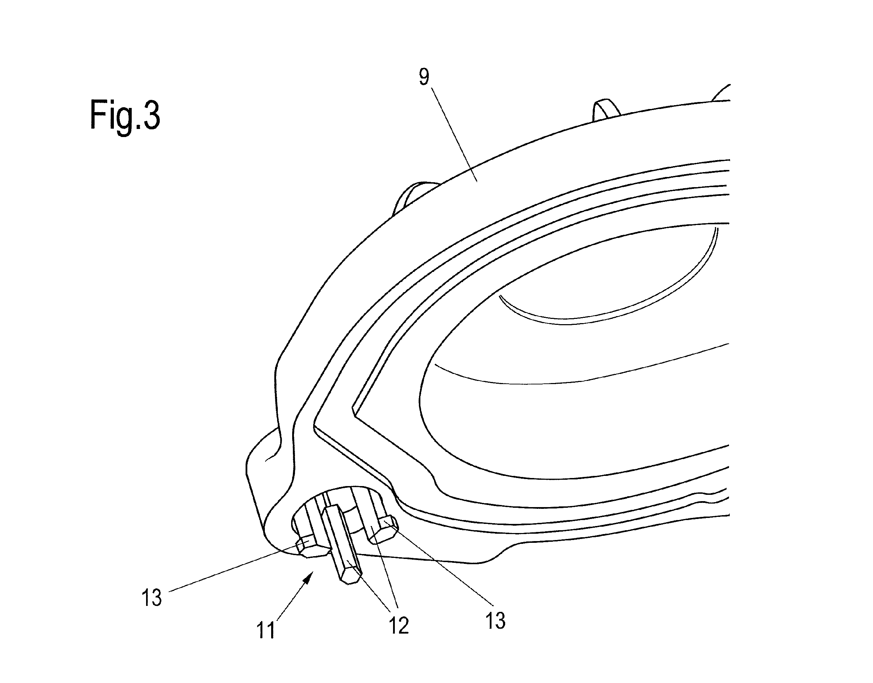

Gemäß der Erfindung ist der Verschlussdeckel 9 unlösbar mit dem Bremssattel 1 verbunden, wozu im Ausführungsbeispiel an den im Spritzgussverfahren hergestellten, aus Kunststoff bestehenden Verschlussdeckel 9 Rastelemente angeformt sind, die aus Rastschenkeln 12 bestehen, von denen, wie insbesondere die Figur 3 sehr deutlich wiedergibt, drei in gleichem Winkelabstand zueinander angeordnete ein Rastelemente-Nest 11 bilden.

Dabei weist jeder Rastschenkel 12 nach außen gerichtete Rastnasen 13 auf, die den Hinterschnitt von nicht dargestellten Rastöffnungen des Bremssattels 1 hintergreifen.

Zur Führung der Rastschenkel 12 in die Rastöffnung sind die federnden Rastschenkel 12 jeweils im Sinne eines Kragarmes ausgebildet, so dass sie beim Einsetzen in die Rastöffnungen zusammengedrückt und in Endposition wieder in ihre Ausgangsstellung zurückgeführt werden.

Dabei ist der Abstand zwischen den Rastnasen 13 und der Auflagefläche des Verschlussdeckels 9 so gewählt, dass der Verschlussdeckel 9 spielfrei am Bremssattel 1 einliegt, wenn die Verrastung erfolgt ist.

Zum Toleranzausgleich kann jede Rastnase 13 zum freien Ende hin abgeschrägt sein, so dass in jedem Fall gewährleistet ist, dass der Verschlussdeckel 9 satt am Bremssattel 1 anliegt.

## Patentansprüche

1. Scheibenbremse, mit einem eine Bremsscheibe übergreifenden Bremssattel (1), einer Zuspanneinrichtung (4), mittels der über mindestens eine Stellspindel (6) ein Bremsbelag (3) gegen die Bremsscheibe (2) pressbar ist, und einer an der Stellspindel (3) angreifenden Nachstelleinrichtung (5), die von einem am Bremssattel (1) durch Verbindungselemente befestigten Verschlussdeckel (9) abgedeckt ist, **dadurch gekennzeichnet, dass** der Verschlussdeckel (9) unlösbar mittels Rastelementen mit dem Bremssattel (1) verbunden ist.

2. Scheibenbremse nach Anspruch 1, **dadurch gekennzeichnet, dass** jedes Rastelement formschlüssig in eine Rastöffnung eingreift.

3. Scheibenbremse nach Anspruch 1 oder 2, **dadurch gekennzeichnet, dass** jedes Rastelement als federnder Rastschenkel (12) ausgebildet ist.

4. Scheibenbremse nach Anspruch 3, **dadurch gekennzeichnet, dass** jeder Rastschenkel (12) eine Rastnase (13) aufweist, die eine Hinterschneidung der zugeordneten Rastöffnung hintergreift.

5. Scheibenbremse nach einem der Ansprüche 3 oder 4, **dadurch gekennzeichnet, dass** mehrere Rastschenkel (12) ein Rastelemente-Nest (11) bilden.

6. Scheibenbremse nach einem der Ansprüche 3 bis 5, **dadurch gekennzeichnet, dass** die Rastnasen (13) der zu einem Rastelemente-Nest (11) gehörenden Rastschenkel (12) sich radial nach außen erstrecken.

7. Scheibenbremse nach einem der vorhergehenden Ansprüche, **dadurch gekennzeichnet, dass** die Rastelemente an den Verschlussdeckel (9) angeformt sind und mit Rastöffnungen des Bremssattels (1) korrespondieren.

8. Scheibenbremse nach einem der vorhergehenden Ansprüche, **dadurch gekennzeichnet, dass** die Rastelemente als separate Teile unlösbar in Bohrungen des Verschlussdeckels (9) oder des Bremssattels (1) gehalten sind.

9. Scheibenbremse nach einem der vorhergehenden Ansprüche, **dadurch gekennzeichnet, dass** die einer Auflagefläche des Verschlussdeckels (9) zugewandte Seite der Rastnasen (13) zur freien Seite hin abgeschrägt ist.

10. Scheibenbremse nach einem Ansprüche 3 bis 9, **dadurch gekennzeichnet, dass** die Rastschenkel (12) eines Rastelemente-Nestes (11) in gleichem Winkelabstand zueinander angeordnet sind.

## Claims

1. Disc brake, comprising a brake calliper (1) encompassing a brake disc, an application device (4), by means of which a brake pad (3) can be pressed against the brake disc (2) via at least one actuating spindle (6), and an adjusting device (5), which acts on the actuating spindle (6) and is covered by a cover (9) secured to the brake calliper (1) by connecting elements, **characterised in that** the cover (9) is permanently joined to the brake calliper (1) by means of latching elements.

2. Disc brake according to claim 1, **characterised in that** each latching element positively engages with a latching opening.

3. Disc brake according to claim 1 or 2, **characterised in that** each latching element is designed as a resilient latching leg (12).

4. Disc brake according to claim 3, **characterised in that** each latching leg (12) has a latching lug (13), which engages an undercut of the associated latching opening from behind.

5. Disc brake according to claim 3 or 4, **characterised in that** several latching legs (12) form a nest (11) of latching elements.

6. Disc brake according to any of claims 3 to 5, **characterised in that** the latching lugs (13) of the latching legs (12) belonging to a nest (11) of latching elements extend radially outwards.

7. Disc brake according to any of the preceding claims, **characterised in that** the latching elements are integrally formed on the cover (9) and correspond to latching openings of the brake calliper (1).

8. Disc brake according to any of the preceding claims, **characterised in that** the latching elements are permanently held in bores of the cover (9) or the brake calliper (1) as separate components.

9. Disc brake according to any of the preceding claims, **characterised in that** the side of the latching lugs (13) which faces a bearing surface of the cover (9) is tapered towards the free side.

10. Disc brake according to any of claims 3 to 9, **characterised in that** the latching legs (12) of a nest (11) of latching elements are arranged at identical angular distances from one another.

## Revendications

1. Frein à disque, comprenant un étrier (1) de frein recouvrant un disque de frein, un dispositif (4) de serrage, au moyen duquel une garniture (3) de frein peut, par l'intermédiaire d'au moins une broche (6) de réglage, être pressée sur le disque (2) de frein et un dispositif (5) de rattrapage de jeu, qui attaque la broche (3) de réglage et qui est recouvert d'un couvercle (9) de fermeture fixé à l'étrier (1) de frein par des éléments de liaison, **caractérisé en ce que** le couvercle (9) de fermeture est relié à l'étrier (1) de frein de manière indesserrable au moyen d'éléments d'encliquetage.

2. Frein à disque suivant la revendication 1, **caractérisé en ce que** chaque élément d'encliquetage pénètre en complémentarité de forme dans une ouverture d'encliquetage.

3. Frein à disque suivant la revendication 1 ou 2, **caractérisé en ce que** chaque élément d'encliquetage est constitué sous la forme d'une branche (12) d'encliquetage élastique.

4. Frein à disque suivant la revendication 3, **caractérisé en ce que** chaque branche (12) d'encliquetage a un bec (13) d'encliquetage, qui s'accroche derrière une contre-dépouille de l'ouverture d'encliquetage associée.

5. Frein à disque suivant l'une des revendications 3 ou 4, **caractérisé en ce que** plusieurs branches (12) d'encliquetage forment un nid (11) d'éléments d'encliquetage.

6. Frein à disque suivant l'une des revendications 3 à 5, **caractérisé en ce que** les becs (13) d'encliquetage des branches (12) d'encliquetage appartenant à un nid (11) d'éléments d'encliquetage s'étendent radialement vers l'extérieur.

7. Frein à disque suivant l'une des revendications précédentes, **caractérisé en ce que** les éléments d'encliquetage sont formés sur le couvercle (9) de fermeture et correspondent à des ouvertures d'encliquetage de l'étrier (1) de frein.

8. Frein à disque suivant l'une des revendications précédentes, **caractérisé en ce que** les éléments d'encliquetage sont maintenus sous forme de parties distinctes de manière indesserrable dans des trous du couvercle (9) de fermeture ou de l'étrier (1) de frein.

9. Frein à disque suivant l'une des revendications précédentes, **caractérisé en ce que** le côté, tourné vers une surface d'appui du couvercle (9) de fermeture, des becs (13) d'encliquetage est biseauté vers le côté libre.

10. Frein à disque suivant l'une des revendications 3 à 9, **caractérisé en ce que** les branches (12) d'encliquetage d'un nid (11) d'éléments d'encliquetage sont disposées les unes par rapport aux autres à une même distance angulaire.
